(19) Europäisches Patentamt / European Patent Office / Office européen des brevets

(11) **EP 4 107 920 B1**

(12) **FASCICULE DE BREVET EUROPEEN**

(45) Date de publication et mention de la délivrance du brevet:
**09.10.2024 Bulletin 2024/41**

(21) Numéro de dépôt: **21705985.6**

(22) Date de dépôt: **19.02.2021**

(51) Classification Internationale des Brevets (IPC):
$H04L\ 9/40^{(2022.01)}$     $H04W\ 12/00^{(2021.01)}$
$H04W\ 12/12^{(2021.01)}$     $G08G\ 5/00^{(2006.01)}$
$H04W\ 4/02^{(2018.01)}$     $H04W\ 4/029^{(2018.01)}$
$H04W\ 4/021^{(2018.01)}$     $H04W\ 4/44^{(2018.01)}$
$H04W\ 4/40^{(2018.01)}$     $H04W\ 12/121^{(2021.01)}$
$H04W\ 12/61^{(2021.01)}$     $H04W\ 12/63^{(2021.01)}$

(52) Classification Coopérative des Brevets (CPC):
**H04L 63/1416; G08G 5/0013; G08G 5/0026; G08G 5/0043; G08G 5/0056; G08G 5/0069; G08G 5/0082; H04W 4/029; H04W 4/40; H04W 12/121; H04W 12/61; H04W 12/63;** H04W 4/02; H04W 4/80

(86) Numéro de dépôt international:
**PCT/EP2021/054232**

(87) Numéro de publication internationale:
**WO 2021/165511 (26.08.2021 Gazette 2021/34)**

(54) **PROCEDE DE SURVEILLANCE D'UN SYSTEME, DISPOSITIFS, SYSTEME ET PROGRAMME CORRESPONDANT**

VERFAHREN ZUR ÜBERWACHUNG EINES SYSTEMS, VORRICHTUNGEN, SYSTEM UND ENTSPRECHENDES PROGRAMM

METHOD FOR MONITORING A SYSTEM, DEVICES, SYSTEM AND CORRESPONDING PROGRAM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.02.2020 FR 2001736**

(43) Date de publication de la demande:
**28.12.2022 Bulletin 2022/52**

(73) Titulaires:
• **Ecole Nationale de l'aviation Civile - ENAC**
**31005 Toulouse Cedex 4 (FR)**
• **Université de Rennes 1**
**35000 Rennes (FR)**

(72) Inventeurs:
• **CONDOMINES, Jean-Philippe**
**31400 Toulouse (FR)**
• **LARRIEU, Nicolas**
**31400 Toulouse (FR)**
• **ZHANG, Ruohao**
**31400 Toulouse (FR)**
• **MOY, Christophe**
**35042 Rennes Cedex (FR)**

(74) Mandataire: **Vidon Brevets & Stratégie**
**16B, rue de Jouanet**
**BP 90333**
**35703 Rennes Cedex 7 (FR)**

(56) Documents cités:
**WO-A1-2018/170734**     **WO-A1-2019/034585**
**CN-A- 104 683 948**

**Description**

1. Domaine

L'invention se rapporte à la surveillance de système comprenant des dispositifs connectés entre eux par l'intermédiaire d'un réseau de communication. L'invention se rapporte plus particulièrement à la surveillance de comportement de dispositifs, et plus particulièrement de dispositifs en mouvement au sein d'un environnement donné.

2. Art Antérieur

Les réseaux de communication formés par des dispositifs plus ou moins autonomes ou robotisés sont en plein essor, notamment grâce à la miniaturisation des composants matériels, l'accroissement de possibilités de communication, la relative puissance fournie par des processeurs financièrement abordable, etc. Ces réseaux de communications peuvent être utilisés dans le cadre de nombreuses tâches.

Par exemple, grâce à l'apport opérationnel de drones dotés de capacités de communication suffisantes, des scénarios d'intervention peuvent être complètement repensés en utilisant une flotte coordonnée de drones. Chaque drone est doté de moyens de communication, soit en tant qu'émetteur (ou source), ou destinataire (ou les deux) d'informations importantes pour la mission (coordonnées GPS, vidéo, etc.). Il est ainsi connu du document WO 2019/034585 A1 un procédé d'identification à distance d'un aéronef, en particulier d'un aéronef sans pilote, tel qu'un multi-rotors. Un tel procédé comprend la réception, par un dispositif d'identification à distance, d'une requête d'interrogation d'un autre aéronef ou d'une station au sol, notamment du contrôle aérien (ATC) ou d'une autre autorité, puis la transmission d'un paquetage de données, après réception de la demande d'interrogation, permettant une identification automatisée à la demande de l'aéronef. Il est également connu du document WO 2018/170734 A1 une méthode de détection de dispositifs aériens autonomes. Cette méthode comprend d'abord l'acquisition d'un paquet de données, comprenant des données de surveillance d'un dispositif UAV, par un détecteur d'un dispositif de détection, puis une étape d'analyse du paquet de données par un processeur pour obtenir lesdites données de surveillance du dispositif UAV.

Cependant, l'utilisation d'une flotte de drone présente de nombreux points d'entrées pour d'éventuelles intrusions malveillantes et la plupart des solutions de communication sans fil pour réseaux communiquant ne considère pas les spécificités du réseau de communication mouvant que ces changements n'interviennent pas. Les conséquences de telles modifications peuvent être problématiques : si elle n'est pas avertie de l'attaque, la station au de contrôle peut alors transmettre des instructions de pilotage qui ne sont pas en adéquation avec la situation effective des drones et par ces instructions compromettre l'intégrité de la mission.

La problématique de sécurisation des communications dans le contexte du transport aérien civil est proche de celle du contexte des drones précédemment évoqué. En effet, toute manoeuvre effectuée par un avion est soumise à une clairance, c'est-à-dire à une autorisation par un contrôleur aérien. Le premier rôle du contrôleur aérien est de fournir des instructions aux pilotes par communication radio afin de séparer les avions et autres appareils volants entre eux. Pour cela, il délivre des instructions précises sur le cap (direction à suivre, voie de circulation au sol à emprunter), l'altitude, la vitesse par guidage radar qui sont destinées à faire suivre à chaque aéronef la trajectoire nécessaire à sa séparation avec les autres trafics environnants, ou avec le relief. Avec un radar primaire ou secondaire, la cible est détectée à partir d'un capteur qui illumine une large portion d'espace avec une onde électromagnétique et qui reçoit en retour les ondes réfléchies par les cibles se trouvant dans l'espace. Une intrusion malveillante peut intervenir lors de la réception des données radars. Dans ce cas-là, le contrôleur aérien reçoit de fausses informations sur son écran radar, qu'il retransmet par liaison radio à l'avion, ce qui pourrait conduire à une potentielle catastrophe aérienne. A la différence de la première situation (drones), les données malveillantes sont insérées postérieurement à la réception des données radar, mais avant l'affichage de celle-ci, dans un système au sol.

Une situation identique est envisageable en industrie, particulièrement dans les tâches robotisées (i.e. mises en oeuvre par des robots, comme dans l'industrie automobile) ou encore par des flottes de robots de manutentions, dans des entrepôts de stockage. Dans de telles situations, ces dispositifs interagissent entre eux et avec une station de contrôle pour remplir des tâches de production ou de manutention. Les positions respectives de ces dispositifs permettent à la station de contrôle de disposer des données nécessaires à l'ordonnancement des taches. Une intrusion au sein d'un tel système pour délivrer des positions fantaisistes peut avoir de graves conséquences, notamment financières, mais également humaines si un ou plusieurs opérateurs interagissent directement avec les robots.

Une situation identique est également envisageable dans les futurs systèmes de conduite, dans lesquels des données de trafic et de conduite sont échangées entre les véhicules sur une route ou une portion de route. Dans le cadre de tels système, on ne dispose pas nécessairement de station de contrôle : chaque véhicule fait office de station de contrôle pour son propre compte. En revanche, chaque véhicule est en mesure de recevoir, de proche en proche (i.e. par un réseau ad-hoc) des données de position, de déplacement et de trafic en provenance d'autres véhicules. Une attaque peut consister en une modification des données reçues par un véhicule afin par exemple de fausser le trajet de celui-ci, voire, pour une attaque coordonnée sur plusieurs véhicules, pour produire ou induire artificiellement des difficultés de circulation.

Pour en revenir au cas des drones, des solutions commerciales (SenseFly, Micropilot) ou open-source (Pixhawk, Paparazzi UAS) existent pour le pilotage d'une flotte de drone. Ces solutions n'ont pour l'instant aucun système de sécurité assez efficace pour supprimer une éventuelle intrusion malveillante qui viendrait dérouter le pilotage d'une flotte de drone. Le contrôle aérien est principalement protégé du type d'attaque précédemment évoqué par la mise en oeuvre de mesures de protection au sein de la station au sol : il s'agit de mesure de protection classique d'un réseau de communication filaire : firewall, chiffrement des communications, etc.

La problématique de la suppression d'intrusion apparaît donc comme un enjeu majeur pour permettre de garantir une intégration sûre de dispositifs connectés à un réseau et agissant potentiellement de manière plus ou moins autonome.

3. Résumé

L'invention permet de répondre à ces problématiques de détection et de résolution d'attaques menées à l'encontre de dispositifs d'un réseau de communication, au moins partiellement « ad-hoc ».

Plus particulièrement, l'invention se rapporte à un procédé de surveillance d'un système comprenant un dispositif de surveillance et une pluralité de dispositifs connectés au dispositif de surveillance par l'intermédiaire d'un réseau de communications, procédé comprenant :

- une étape d'analyse de contenus de paquets échangés au sein du réseau de communication, délivrant une donnée représentative d'un comportement d'au moins un dispositif courant parmi la pluralité de dispositifs, comprenant :

  - une étape d'obtention, pour un dispositif courant, d'une série temporelle représentative du contenu de paquets de données reçu par le dispositif de surveillance, pour une période déterminée, dite série temporelle courante ;
  - une étape de calcul, d'une distance séparant le contenu d'un paquet courant du contenu d'un paquet précédent au sein de ladite série temporelle courante, délivrant une série temporelle de distances ;
  - une étape d'obtention, à l'aide de ladite série temporelle de distances, d'une signature représentative d'une activité dudit dispositif courant, dite signature courante ;

- optionnellement, lorsque la donnée représentative du comportement du dispositif courant excède un seuil prédéterminé, une étape de mise en oeuvre d'une procédure de correction.

Ainsi, il est possible de tenter de corriger une déviation comportementale d'un dispositif sous surveillance. La mise en oeuvre de l'étape de correction est optionnelle. L'objet de l'invention se rapportant à titre principal à la détection d'anomalie comportementales dans les paquets de données transmis par les dispositifs du système.

Selon une caractéristique particulière, ladite étape d'analyse comprend :

- une étape de comparaison de ladite signature courante avec au moins une signature de référence délivrant ladite donnée représentative du comportement dudit dispositif courant ; et/ou
- une étape de classification de la signature courante à l'aide d'un module de classification automatique.

Ainsi, il est possible de réaliser une évaluation rapide et peu coûteuse en temps de traitement d'un comportement d'un dispositif sous surveillance.

Selon un mode de réalisation particulier, ladite distance est une distance euclidienne.

Ainsi, la distance est simple à calculer.

Selon une caractéristique particulière, la distance euclidienne est calculée en appliquant la fonction suivante, pour un dispositif courant :

$$F_{eucd}\left([\theta_{i,t}, \rho_{i,t}], [\theta_{i,t+t_{INT}}, \rho_{i,t+t_{INT}}]\right) = \sqrt{\rho_{i,t}^2 + \rho_{i,t+t_{INT}}^2 - 2\rho_{i,t}\cdot\rho_{i,t+t_{INT}}\cos(\theta_{i,t} - \theta_{i,t+t_{INT}})}$$

Dans laquelle :

- $[\theta_{i,t}, \rho_{i,t}]$ représente les coordonnées du dispositif courant i à un instant $t$;
- $[\theta_{i,t+t_{INT}}, \rho_{i,t+t_{INT}}]$ représente les coordonnées du dispositif courant i à un instant $t+t_{INT}$ ;
- $t_{INT}$ représente l'intervalle de temps séparant les deux coordonnées.

Selon une caractéristique particulière, l'étape d'obtention de la signature courante comprend la détermination d'une courbe représentative du spectre multi fractal desdites distances de ladite série temporelle courante.

Ainsi, une signature comportementale peut être construite efficacement. Autrement dit, l'analyse multi fractale permet de limiter la quantité de données traitée par le procédé, ce qui augmente son efficacité.

Selon un mode de réalisation particulier, ladite étape d'obtention de la série temporelle courante comprend :

- l'identification, au sein d'un ensemble de paquets reçus par ledit dispositif de surveillance, d'un sous-ensemble de paquets comprenant des positions successives du dispositif courant au sein d'en environnement donné ;
- l'extraction desdites positions successives dudit dispositif courant dudit sous-ensemble de paquets ;
- l'ordonnancement temporel desdites positions délivrant ladite série temporelle courante.

La détermination des distances subséquentes est alors facilitée.

Selon un mode de réalisation particulier, ladite étape de mise en oeuvre d'une procédure de correction comprend :

- la détermination d'une technique de transmission courante utilisée par le dispositif courant ;
- la sélection, parmi au moins deux techniques de transmission disponibles, d'une technique de transmission de substitution, différente de la technique de transmission courante ;
- le remplacement de ladite technique de transmission courante, par la technique de transmission de substitution.

Il est alors possible de tenter de contrôler le dispositif dont le comportement est potentiellement suspect.

Selon une caractéristique particulière, lesdites au moins deux techniques de transmission disponibles comprennent, pour un protocole donné de transmission radio au moins deux bandes de transmission différentes.

Dès lors, la probabilité que les deux techniques de transmission subissent simultanément une avarie est liée à la probabilité que le dispositif sous surveillance fait l'objet d'une attaque.

Selon un mode de réalisation particulier, les dites au moins deux techniques de transmission disponibles appartiennent au groupe comprenant :

- wifi ;
- zigbee ;
- lifi ;
- LTE.

Selon une caractéristique particulière, lesdits dispositifs de la pluralité de dispositifs connectés au dispositif de surveillance appartiennent au groupe comprenant :

- des véhicules aériens léger sans équipage ;
- des véhicules roulants ;
- des véhicules aériens avec équipage ;
- des dispositifs de transports autonomes ;
- des dispositifs de production ;
- des objets connectés.

Dans un autre mode de réalisation, l'invention porte également sur un dispositif de surveillance d'un système comprenant un dispositif de surveillance et une pluralité de dispositifs connectés au dispositif de surveillance par l'intermédiaire d'un réseau de communications. Un tel dispositif comprend :

- des moyens d'analyse de contenus de paquets échangés au sein du réseau de communication, délivrant une donnée représentative d'un comportement d'au moins un dispositif courant parmi la pluralité de dispositifs ;
- des moyens de mise en oeuvre d'une procédure de correction, activés lorsque la donnée représentative du comportement du dispositif courant excède un seuil prédéterminé.

Selon l'invention, un tel dispositif peut se présenter sous la forme d'une station de contrôle dédiée ou bien être intégré à un ou plusieurs dispositifs de surveillance, augmentant ainsi de manière importante la résilience d'un tel système aux attaques.

L'invention concerne enfin un produit programme d'ordinateur comprenant des instructions de code de programme pour la mise en oeuvre d'un procédé tel que décrit précédemment, lorsqu'il est exécuté par un processeur.

L'invention vise également un support d'enregistrement lisible par un ordinateur sur lequel est enregistré un programme d'ordinateur comprenant des instructions de code de programme pour l'exécution des étapes du procédé selon l'invention tel que décrit ci-dessus.

Un tel support d'enregistrement peut être n'importe quelle entité ou sous-système capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, un tel support d'enregistrement peut être un support transmissible tel qu'un signal électrique ou optique, qui peut être acheminé via un câble électrique ou optique, par radio ou par d'autres moyens, de sorte que le programme d'ordinateur qu'il contient est exécutable à distance. Le programme selon l'invention peut être en particulier téléchargé sur un réseau par exemple le réseau Internet.

Alternativement, le support d'enregistrement peut être un circuit intégré dans lequel le programme est incorporé, le circuit étant adapté pour exécuter ou pour être utilisé dans l'exécution du procédé objet de l'invention précité.

4. Description des figures

D'autres caractéristiques et avantages apparaîtront plus clairement à la lecture de la description suivante d'un mode de réalisation préférentiel, donné à titre de simple exemple illustratif et non limitatif, et des dessins annexés, parmi lesquels :

- [Fig. 1] expose le principe général de l'invention ;
- [Fig. 2] illustre un exemple d'architecture au sein de laquelle l'invention est mise en oeuvre ;
- [Fig. 3] illustre un exemple d'attaque sur l'architecture de la figure 2 ;
- [Fig. 4] illustre succinctement l'architecture d'un dispositif de surveillance ;
- [Fig. 5] illustre succinctement l'architecture d'un dispositif sous surveillance ;

5. Description détaillée

5.1. Principe général

Le principe général de l'invention consiste dans une première étape à détecter une anomalie comportementale d'un ou de plusieurs dispositifs d'un réseau de communication et dans une deuxième étape à adapter la technique de transmission de données, au moins entre ces dispositifs (au comportement suspect) et ceux avec lesquels ils échangent des données au sein du réseau de communication. La deuxième étape est optionnelle : l'objet de l'invention se rapportant à titre principal à la détection d'anomalie comportementales dans les paquets de données transmis par les dispositifs. L'invention trouve notamment une application dans les réseaux ad-hoc. Plus particulièrement, l'invention s'applique dans un système comprenant de multiples dispositifs connectés entre eux, notamment, bien que non exclusivement, par l'intermédiaire d'un réseau qui peut être ad-hoc car ne s'appuyant pas uniquement sur une infrastructure préexistante. Dans un système dans lequel l'invention est mise en oeuvre, les dispositifs du réseau participent au moins à certains moments au routage des données en retransmettant les données aux autres dispositifs, de façon à ce que le choix du dispositif qui transmet les données est opéré au moins partiellement dynamiquement sur la base de la connectivité du réseau et de l'algorithme de routage utilisé.

Ainsi, comme indiqué précédemment, l'invention peut être mise en oeuvre dans le cadre de systèmes comprenant de multiples drones (ou en anglais UAV), avions, véhicules routiers, autonomes ou non, robots dans une usine de productions ou de manutention, objets connectés, etc. De plus, un même système peut comprendre des dispositifs différents, notamment différents types d'objets connectés. A l'aide de la technique décrite, il est possible de détecter un comportement anormal ou inhabituel d'un ou de plusieurs dispositifs du réseau et, optionnellement, de modifier une ou plusieurs techniques de transmission avec ce dispositif pour maintenir le réseau et le système en conditions opérationnelles. Dans ce qui précède et pour ce qui suit, un dispositif au comportement potentiellement anormal et appelé un dispositif cible.

L'invention s'inscrit particulièrement bien dans un contexte de flotte de drones, lesquels sont connectés entre eux et/ou à une station de commande au sol par l'intermédiaire d'un réseau de communications au moins partiellement ad-hoc : la configuration du réseau de communication évolue avec les déplacements des objets au sein d'un espace donné. Il en est de même pour le transport civil aérien ou encore pour les véhicules (autonomes ou non) en déplacement dans un espace donné (par exemple une autoroute ou une portion d'autoroute). On comprend que de tels systèmes peuvent avoir un caractère sensible, notamment du point de vue de la sécurité (des passagers, des occupants, des civils) et peuvent requérir une certaine sécurisation.

Créer un système de prévention de l'intrusion (en anglais : Intrusion Prévention System (IPS), également appelé système de surveillance) qui détecte et bloque une intrusion malveillante dans le contexte drone ou dans le contexte du transport aérien civil est pertinent, car il permet de mettre en place des outils de vérification formelle et donc de satisfaire une approche de certification ATM/UTM. D'une manière générale on désigne par le terme dispositif un « agent » (un drone ou un avion un véhicule) dans un système comprenant une pluralité de dispositifs connectés entre eux par l'intermédiaire d'un réseau de communication.

Un tel système de surveillance permet de garantir l'intégrité des communications qui sont échangées (dispositif à dispositif ou dispositif vers station de contrôle, s'il y en a une) et viser une certification dans une approche UTM (UAV Traffic Management).

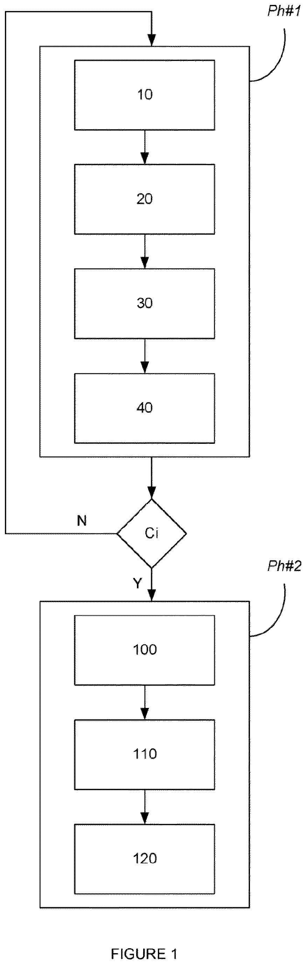

Selon l'invention, le procédé de surveillance, décrit en relation avec la figure 1, d'un système comprenant un dispositif de surveillance et une pluralité de dispositifs connectés au dispositif de surveillance par l'intermédiaire d'un réseau de communications mis en oeuvre comprend une étape d'analyse (Ph#1) de contenus de paquets échangés au sein du réseau de communication, délivrant une donnée représentative d'un comportement d'au moins un dispositif courant parmi la pluralité de dispositifs. Cette première étape d'analyse comportementale constitue le coeur de l'invention.

En fonction des modes de réalisation, cette étape d'analyse peut, lorsque (Ci) la donnée représentative du comportement du dispositif courant excède un seuil prédéterminé, être suivi d'une étape (Ph#2) de mise en oeuvre d'une procédure de correction.

La première étape (Ph#1) mise en oeuvre comprend une analyse comportementale des dispositifs du système, qui comprend notamment une analyse spectrale (WML) de données représentatives du déplacement des objets dans l'espace donné (cette étape comprend la mise en oeuvre d'une technique dite « IDS », de l'anglais pour « Intrusion Détection System »), dont la traduction évoque la détection d'une intrusion, le technique étant cependant utilisé pour effectuer une détection de comportement potentiellement anormal, pas nécessairement représentatif d'une intrusion. Ainsi, dans le cadre de la présente, on cherche à détecter une anomalie comportementale, perçue par exemple par un dispositif de surveillance (i.e. la station au sol, un dispositif de surveillance d'un réseau, par exemple dans le domaine de l'internet des objets), d'un ou de plusieurs dispositifs cibles (drones, avions, véhicules, dispositifs autonomes échangeant des données au sein du système). Cela ne signifie pas que le comportement effectif du dispositif a réellement changé (le dispositif peut éventuellement se comporter normalement) : cependant la perception que le dispositif de surveillance a du dispositif cible peut changer. En d'autres termes, on cherche à identifier et à contourner une attaque d'un type résultant en une modification des données en provenance d'un ou de plusieurs dispositifs du système (que cette modification soit consécutive d'un changement effectif de comportement ou d'une simulation de changement de comportement opérée par l'attaquant). Pour ce faire, à la différence d'autres types d'attaques, notamment par inondation (attaque consistant à rendre un ou plusieurs dispositifs inutilisables en inondant celui-ci de données ou de requêtes), la détection d'une anomalie comportementale est basée sur le contenu des données reçues de la part des dispositifs cibles (drones, avions, véhicules) du système. On se place donc dans le cas d'un dispositif de surveillance qui obtient, en provenance des autres dispositifs du système, des paquets de données. Le dispositif de surveillance effectue une analyse de contenus de paquets échangés au sein du réseau de communication, et délivre une donnée représentative d'un comportement d'au moins un dispositif courant parmi la pluralité de dispositifs. Cette donnée représentative peut prendre la forme d'un score mono ou multidimensionnel. Lorsque ce score se situe au-delà d'un seuil ou d'un plafond prédéterminé, le comportement du dispositif cible est considéré comme anormal.

Plus particulièrement, dans le cadre de l'invention, les inventeurs ont eu l'idée de caractériser les données reçues en provenance des dispositifs du réseau de communication. Cette caractérisation est réalisée en analysant le contenu des paquets de données et en corrélant ces données temporellement, puis en les injectant dans un algorithme d'analyse spectrale des données. Plus particulièrement, dans au moins un mode de réalisation, les données extraites des paquets sont des données de vitesse, d'altitude, de position, d'altitude, d'attitude, d'accélération, etc. Dans un mode de réalisation spécifique, décrit par la suite, les données de position sont celles qui sont extraites des paquets de données reçus par le dispositif de surveillance pour traiter, en temps réel, les déplacements des dispositifs sous surveillance. Décrite en relation avec la figure 1, cette première étape (PH#1) comprend :

- une étape d'obtention (10), pour un dispositif courant, d'une série temporelle représentative du contenu de paquets de données reçu par le dispositif de surveillance, pour une période déterminée, dite série temporelle courante ;
- une étape de calcul (20), d'une distance (Delta) séparant le contenu d'un paquet courant du contenu d'un paquet précédent au sein ladite série temporelle courante, délivrant une série temporelle de distances ;
- une étape d'obtention (30), à l'aide de ladite série temporelle de distances, d'une signature représentative d'une activité dudit dispositif courant, dite signature courante ; la signature représentative de l'activité est assimilée au comportement du dispositif courant.
- une étape de comparaison (40) de ladite signature courante avec au moins une signature de référence délivrant ladite donnée représentative du comportement dudit dispositif courant ; et/ou
- une étape d'obtention, à partir de cette signature, d'une donnée représentant un comportement, à partir d'un dispositif de classification automatique au sein duquel la signature est insérée.

Par le terme distance, on entend la différence entre une donnée à un instant t et à un instant t-1. Autrement dit, il s'agit d'une fonction différentielle. La distance est ainsi une distance euclidienne lorsque la donnée est la position du dispositif. Cependant, la distance peut être de tout autre type selon la donnée. Ainsi, d'une manière générale, on récupère, pour un dispositif courant, l'ensemble des paquets de données « pertinents » (i.e. d'un type spécifique, par exemple la localisation, la vitesse, l'orientation, l'accélération, etc.) reçus pour ce dispositif, puis on extrait les données contenues dans ces paquets et on les ordonne (en tenant compte de timestamp de réception de ces paquets). Puis, on utilise les données extraites (éventuellement traitées comme cela est expliqué par la suite dans un mode de réalisation) et ordonnées pour calculer une signature de ces données. La signature obtenue pour cette série temporelle de données est ensuite comparée à une signature précédente (i.e. précédemment calculée), pour le même dispositif (soit pour un dispositif différent ou générique ou un dispositif « composite » combinant les signatures des autres dispositifs du réseau). Lorsque cette comparaison excède un seuil de comparaison prédéterminé, le dispositif est tagué en tant que dispositif cible (au comportement « anormal » ou « suspect »).

D'une manière générale, selon l'invention, la méthode de détection est basée sur une analyse spectrale (WLM) des données de déplacement d'un ou de plusieurs véhicules. Par exemple, les données de déplacement peuvent être des données de positions (en coordonnées cartésiennes ou polaires). Cependant, d'autres données comme la vitesse, l'altitude, la latitude ou encore l'accélération peuvent être prises en compte afin d'apporter des facteurs de caractérisation supplémentaires sur l'état du dispositif à l'analyse spectrale WLM et obtenir des résultats de détection plus fins ou plus représentatifs d'une situation donnée. L'avantage d'utiliser une telle technique d'analyse spectrale est que :

- celle-ci permet de détecter de faibles variations d'intrusions (attaque par spoofing) ; un pré-traitement peut être appliqué sur les données de déplacement fournies à la méthode WLM afin de détecter le plus précisément possible une éventuelle intrusion qui serait due à une faible modification (attaque par spoofing) de ces données, qualifiée de « nominale » ; ce pré-traitement comprend notamment l'utilisation d'une fonction *"Delta"* qui crée un vecteur différentiel de données et ainsi augmente la sensibilité de la méthode WLM en travaillant non plus sur les données elles-mêmes, mais sur des variations de ces données.

- A la différence des techniques usuelles, qui font appel à de l'apprentissage automatique (machine learning ou deep learning) directement sur les données de vols, la technique proposée utilise peu de ressources en calcul, ce qui le rend implantable directement dans un dispositif au capacités moindres ; en effet, les techniques de classification automatique sur des données de déplacement « non traitées » (i.e. donnée de déplacement de base) sont efficaces mais elles ont besoin d'un grand nombre de données pour élaborer un modèle fiable et ne sont généralement pas implémentables en temps réel sur des véhicules de petite taille où les capacités de calcul sont limitées. Les résultats de détection étant uniquement obtenus à partir de différentiels de données de déplacement, comme exposé par la suite, la méthode de l'invention permet d'obtenir un compromis satisfaisant entre précision et coût de calcul.

- Par ailleurs, selon l'invention, les données de signatures elles même peuvent être insérées dans un dispositif de classification automatique : les données issues des paquets sont prétraitées, par la fonction delta d'une part (étape 20), puis ces données issues de l'étape de calcul de distance sont utilisées pour la mise en oeuvre de la méthode WLM (étape 30). La signature obtenue est alors fournie à un dispositif de classification automatique (préalablement entrainé) pour obtenir une ou plusieurs données qui peuvent représenter un comportement anormal. Les inventeurs ont en effet constaté, à la différence de la technique consistant à fournir les données brutes, que cette technique consistant à fournir une signature au dispositif de classification automatique fournissait des résultats nettement plus pertinents pour la détection : la raison principale réside dans le fait que la signature est une donnée prétraitée, issue d'un calcul permettant en quelque sorte de dériver les données de paquet les unes par rapport aux autres, et donc de réaliser un lissage de ces données avant la mise en oeuvre de la méthode WLM : les données fournies au dispositif d'apprentissage sont donc plus propres que des données brutes et donc plus susceptibles d'être apprises et analysées efficacement par un dispositif de classification automatique pour fournir des résultats probants.

La deuxième étape (Ph#2) comprend la mise en oeuvre d'une procédure de correction sur ce dispositif cible. Cette procédure de correction vise à établir un lien physique non perturbé avec le dispositif cible. Pour ce faire, selon l'invention, on remplace la technique de transmission de données courante utilisée par le dispositif considéré comme anormal par une technique de transmission de données de substitution. Ce remplacement peut prendre plusieurs formes : il peut par exemple consister en un changement de bande de fréquence de transmission de données, sans changer le protocole utilisé (par exemple changement de bande de fréquence pour du Wifi). Ce type de changement est rapide et peut en première approche, permettre de reprendre le contrôle d'un dispositif cible. Le remplacement peut également consister à modifier la technologie de transmission utilisée : par exemple passer d'une transmission WiFi à une transmission de type ZigBee, LTE, ou autre technologie radio ou non, en fonction des technologies à disposition des dispositifs. Auquel cas, le remplacement de la technique utilisée peut prendre plus de temps. On note que dans le cadre de l'invention au sein d'un réseau « ad-hoc », le dispositif cible ne communique pas nécessairement directement avec le dispositif de surveillance. Pour corriger le dispositif cible, plusieurs méthodes sont envisageables.

La méthode privilégiée par les inventeurs consiste à ne modifier la technique de transmission que vis-à-vis du dispositif cible. Plus particulièrement, le changement de technique de transmission comprend, toujours en relation avec la figure 1 :

- la détermination (100) d'une technique de transmission courante utilisée par le dispositif courant ;
- la sélection (110), parmi au moins deux techniques de transmission disponibles, d'une technique de transmission de substitution, différente de la technique de transmission courante ;
- le remplacement (120) de ladite technique de transmission courante, par la technique de transmission de substitution.

Cela signifie que d'une part la technique de transmission utilisée par le dispositif cible lui-même est modifiée : le dispositif cible utilise donc une technique différente pour transmettre et recevoir des données en provenance d'autres dispositifs. Les dispositifs qui communiquent avec le dispositif cible font de même : lorsqu'ils transmettent ou reçoivent des données en provenance du dispositif cible, les autres dispositifs du réseau adaptent la technique employée pour le dispositif cible. Ainsi, chaque dispositif du réseau dispose d'une zone mémoire comprenant les données techniques nécessaires, notamment en termes de technique de communication à employer, pour communiquer avec les autres dispositifs du réseau. Cette zone mémoire comprend également une liste, mise à jour dynamiquement, des dispositifs appartenant au réseau de communication. Cette zone mémoire comprend également une liste de paramètres de communications, comprenant des identifiants de dispositifs, éventuellement des matériels de chiffrement et paramètres nécessaires à la communication. Ces listes peuvent être réunies au sein d'une seule et même base de données, laquelle est gérée de manière indépendante par chaque dispositif. Avantageusement, cette liste peut être gérée de manière centralisée par le dispositif de surveillance qui détermine l'agencement du réseau et fourni aux différents dispositifs les données nécessaires à leurs communications, que ce soit dans un mode centralisé ou dans un mode « ad-hoc ». Le dispositif de surveillance gère ainsi la topologie du réseau de communication, au cours de l'utilisation de celui-ci et transmet aux différents dispositifs, les données nécessaires au maintien en condition opérationnelle du réseau. Les données transmises par le dispositif de surveillance peuvent être fournies à un premier dispositif du réseau qui se charge lui-même de fournir ces données à un ou plusieurs autres dispositifs, etc., jusqu'à ce que l'ensemble des dispositifs du réseau disposent des mêmes informations et paramètres. Ce procédé de mise à jour peut être implémenté à chaque fois qu'un dispositif cible doit changer de technique de transmission.

Alternativement, lorsqu'un dispositif cible change de technique de transmission, il est également possible de modifier la technique de transmission de l'ensemble des dispositifs du réseau, pour que la technique employée soit la même pour tous. L'avantage d'une telle commutation générale est de ne pas complexifier la gestion du réseau. L'inconvénient est que potentiellement cette commutation générale induise un temps de latence important dans l'ensemble du réseau, et pas uniquement pour le dispositif cible.

Par ailleurs, outre les changements de technique de communication, la deuxième étape peut également mettre en oeuvre une technique d'isolation du dispositif cible, technique consistant d'une part à interdire, aux autres dispositifs du réseau de communiquer avec le dispositif cible et d'autre part à ne pas prendre ne compte les données reçues de la part du dispositif cible. Cette technique d'isolation peut être efficace en cas d'attaque avérée et d'impossibilité de reprendre le contrôle du dispositif cible.

De manière complémentaire, pour transmettre des instructions de commutation aux différents dispositifs du réseau de communication, il est envisagé d'utiliser un canal auxiliaire, dont le débit est inférieur et dont la technologie est plus sécurisée. Par exemple, ce canal de communication auxiliaire peut être un canal de « pilotage » (i.e. un canal dédié à la transmission de données de pilotage), qui est alors utilisé à titre secondaire pour transmettre des données de commutation aux dispositifs du réseau. L'avantage d'un tel canal de pilotage est qu'il est sécurisé, par exemple en utilisant une architecture de chiffrement asymétrique ou symétrique, configurée lors d'une étape d'initialisation du réseau de communication ou lors d'une étape « d'accroche » d'un nouveau dispositif dans le réseau de communication.

Une fois que la modification de la technique de transmission est effectuée, les données en provenance du dispositif continuent d'être analysées et la première étape (Ph#1). Ainsi, la première étape d'analyse comportementale est mise en oeuvre de manière continue. La deuxième étape (Ph#2) de correction de comportement est mise en oeuvre au cas par cas, en fonction des résultats fournis par la première étape.

Ainsi, l'invention permet de résoudre de nombreux problèmes posés par les réseaux de communication décrits précédemment.

5.2. Description d'un mode de réalisation

5.2.1. Explications sur le système dans un contexte de flotte de drones (en anglais, UAV ou RPAS pour *« Remote Piloted Aircraft System »*) pour un mode de réalisation particulier

Une configuration classique d'une architecture matérielle et logicielle pour faire voler un système RPAS peut être décomposée en trois segments : le segment « sol », le segment « air » et le système de communication :

- Segment « sol » : il s'agit des infrastructures logicielles et matérielles au sol (station au sol, antennes, modems, récepteurs vidéo) utilisées pour préparer, surveiller et analyser le vol. Une station sol (en anglais, Ground Control Station, GCS) comprend : une IHM (écran, clavier, joystick, ...) permettant d'interagir avec un ou plusieurs RPAS. La GCS permet ainsi de coordonner le ou les drones en temps réel grâce à cette interface homme-machine (IHM). Cette interface affiche en temps réel la position courante de chaque drone, les points de passage utilisés par le plan de navigation des drones ainsi que les paramètres de vol de chaque drone (altitude, vitesse de vol, batterie, ...). Cette station peut être centralisée à un endroit ou répartie sur plusieurs ordinateurs /emplacements ;
- Segment « Air » : le ou les drone(s), ses composants matériels, y compris la charge utile et tous les logiciels intégrés permettant de contrôler le vol (de la stabilisation à la prise de décision). Le logiciel embarqué est généralement divisé en plusieurs ordinateurs de bord dotés de fonctionnalités temps réel (MCU utilisant des interruptions, avec ou sans système d'exploitation) ou d'une puissance de calcul supérieure (matériel dédié tel que FPGA, processeurs embarqués haut de gamme tels qu'OMAP ou ATOM) ;
- Segment de communication : La GCS dispose d'un radio modem de communication qui lui permet soit de transmettre des instructions à la flotte de drone, soit de recevoir des données de vol qui sont traitées au sol et/ou affichées dans l'interface homme-machine. La flotte de drone dispose aussi de plusieurs radios modem de communication qui sont sur la même fréquence et/ou le même protocole que le radio modem de la station sol. Le segment communication intègre ainsi les liaisons de communication et les protocoles entre les segments « sol » et « air ». Il s'agit principalement de définir les liens de communication avec la bande passante utilisé, la fréquence, le type (unidirectionnel, bidirectionnel), les protocoles (comment les informations sont codées), le contenu des messages (quelles informations sont dans les messages) et la structure du réseau de communication (système centralisé), redondance dynamique de point à point, etc.). La communication entre drones peut se faire de manière centralisée (tous les liens de communication sont centralisés vers la station sol) ou décentralisés (les liens de communication apparaissent entre les drones).

Le pilote « automatique » des drones et la station de commande au sol (une partie du segment au sol) sont fonctionnellement très liés et sont généralement développés et proposés par le même fournisseur. Le pilote « automatique » utilise un récepteur GPS (ou autre technologie) intégré pour la navigation et transmet ces informations à la station sol en utilisant un une technique et/ou un protocole de transmission prédéterminé. En phase de vol autonome, le pilote peut surveiller en temps réelle drone et intervenir en cas de détection d'un écart par rapport à la mission prédéfinie. Ainsi, la station de contrôle au sol est dédiée à la visualisation de tâches de préparation, de surveillance, de contrôle et d'ingénierie de vol (réglage du vol, post-traitement des journaux, etc.).

Dans ce mode de réalisation, on considère que la GCS implémente un dispositif de surveillance selon l'invention, soit en tant que fournisseur de données (dispositif autonome) soit en étant complètement intégré à la GCS.

5.2.2. Cas d'utilisation d'un réseau UAANET (UAV Ad-Hoc Network) pour une flotte de drones & intrusion malveillante dans ce réseau UAANET.

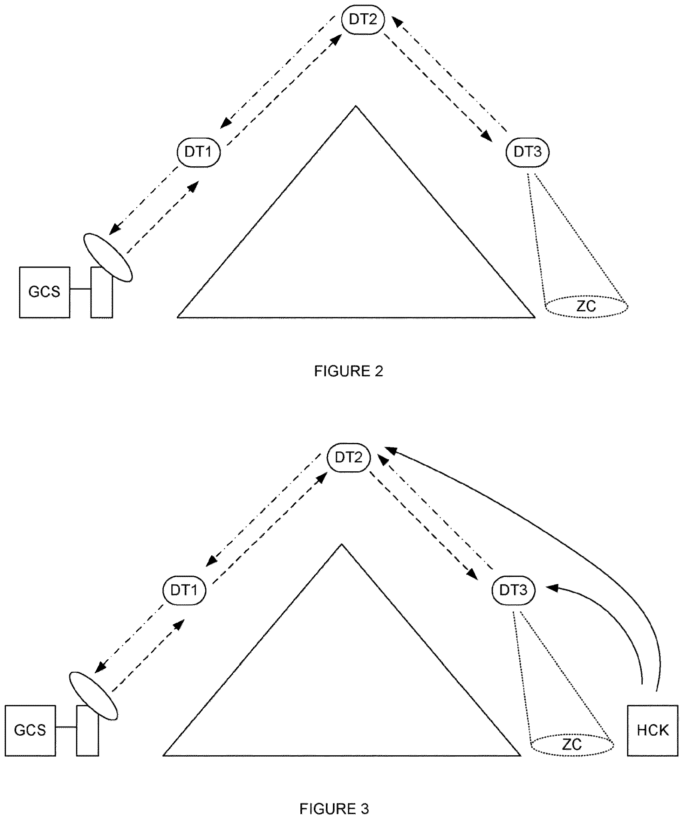

L'un des cas d'utilisation d'un réseau de communication entre drones est détaillé dans la figure 2. L'un des scénarios d'application de notre projet de recherche implique trois UAV *(« Unmanned Air Vehicle »)* (DT1, DT2 et DT3). On suppose par exemple que DT3 est dédié à la capture et à la transmission, au GCS, de vidéos provenant d'une zone de couverture (ZC). Quant à DT1 et DT2, ils sont utilisés en tant que noeud relais et acheminent les trafics entre le GCS et le DT3. Ce cas d'utilisation nécessite que le GCS envoie en permanence du trafic de contrôle à tous les UAV. Au début, les trois UAV se déplacent conformément à leurs plans de vol tout en étant connectés au poste de commande au sol (GCS). On suppose ensuite que sur la base de la mise à jour du plan de mission, le noeud DT3 doit être déplacé vers un autre emplacement pour couvrir une zone géographique spécifique. Les communications directes sont alors impossibles avec le GCS en raison d'une perte de couverture (induisant une déconnexion). De plus, on suppose qu'un obstacle empêche une connectivité directe entre DT3 et le GCS. Dans ce cas, DT1 et DT2 agissent en tant que relais pour assurer les communications vers le système GCS. Les données de surveillance sont donc échangées entre DT3 et le SCG via DT1 et DT2.

Dans le cas d'une intrusion malveillante, figure 3, le cyber attaquant (HCK) peut soit écouter les communications, soit transmettre des informations erronées et/ou malveillantes aux drones et/ou à la GCS. Face à ces intrusions malveillantes, le dispositif de surveillance (IPS) a pour fonction de détecter et bloquer l'attaque. Sur la figure 3, on a pris l'exemple d'une implémentation de l'IPS dans la GCS mais il est envisagé d'implémenter le dispositif en question sur chaque drone qui compose la flotte, afin d'assurer une autosuffisance en termes de protection.

Pour détecter et bloquer (ou contourner) une ou plusieurs intrusions dans les contextes décrits précédemment, on considère la détection et le blocage d'une (potentielle) attaque sur des données de vol (position, etc.) qui sont échangées entre la flotte de drones et la GCS à partir d'un lien de communication (télémétrie) montant et descendant. À noter que des données peuvent être aussi échangées entre drones de la flotte, ce qui ne remet pas en cause le principe général de la technique décrite. Cette technique peut également être mise en oeuvre sur des données de vol d'avion de transport visualisées sur un écran radar du contrôleur aérien, comme explicité précédemment.

Il existe différentes attaques sur les communications radios de drones, qui portent chacune atteinte à différents paramètres des communications radios. Dans ce mode de réalisation, on s'intéresse à une attaque de type *« usurpation »*, dont l'objet est une falsification des informations relatives aux identités. Cette attaque conduit à l'échange de fausses informations avec une atteinte à l'intégrité et à la confidentialité. Dans le contexte d'un agent (drone utilisant une interface IHM de type GCS) ou avion (repéré par une interface IHM de type radar), elle est principalement caractérisée par la prise de contrôle de la position de l'agent ou l'ajout d'agent « inexistant » qui est affiché sur l'IHM.

5.2.3. Détection d'une anomalie comportementale

Dans le cadre de la présente, on cherche à détecter une anomalie comportementale relative à la position perçue par le dispositif de surveillance (i.e. la station au sol par exemple) d'un ou de plusieurs dispositifs (drones). Cela ne signifie pas que la position effective (réelle) du dispositif a effectivement changé (le dispositif peut éventuellement se trouver à une position normale) : cependant la perception que le dispositif de surveillance a du dispositif peut changer. En d'autres termes, on cherche à identifier et à contourner une attaque d'un type résultant en une modification des données de position en provenance d'un ou de plusieurs dispositifs du système (que cette modification soit consécutive d'un changement effectif de comportement ou d'une simulation de changement de comportement). Pour ce faire, à la différence d'autres types d'attaque, notamment par inondation (attaque consistant à rendre un ou plusieurs dispositif inutilisables), la détection d'une anomalie comportementale est basée sur le contenu des données de position reçues de la part des dispositifs (drones, avions, véhicules) du système.

La détection comprend notamment l'utilisation astucieuse d'un algorithme de type « WLM » à partir de l'enregistrement d'une série de données de positions prétraitées, provenant soit du segment « sol » (GCS, traces radars), soit du segment « air » (drone(s), avion(s), aéronef(s), ou plus généralement des dispositifs). On suppose dans ce cas que l'intrusion malveillante vient perturber le segment « sol » sur des données de position qui peuvent avoir des coordonnées cartésiennes (x(t), y(t)) ou polaires (ρ(t), θ(t)), « t » étant compris dans un intervalle d'analyse *[t0; t0+n]* ou « n » représente la durée de l'intervalle d'analyse.

Tout d'abord, dans ce mode de réalisation, un prétraitement des données est réalisé pour convertir les postions successives des dispositifs (x(t), y(t)) ou (ρ(t), θ(t)) en un vecteur différentiel de positions successives entre dispositifs Δ (x(t), y(t)) ou Δ(ρ(t), θ(t)) (il s'agit donc d'un vecteur de distance euclidienne entre dispositifs de la flotte). Les inventeurs ont en effet identifié un effet particulier résultant de cette technique différentielle : la sensibilité de l'algorithme « WLM » est améliorée et la signature résultante est donc plus fine. Le vecteur différentiel de comportement (e.g. distances, positions, attitudes, altitudes, vitesses, angles, etc.) est livré l'algorithme de type « WLM » et celui-ci fournit des caractéristiques (appelées signatures) composées des moments du signal, de la granularité et du facteur d'échelle. À partir de ces signatures, des seuils d'intrusion sont calculés par comparaison entre la forme de la signature pour un trafic normal (la forme de la signature pour un trafic normale pouvant résulter des mesures et analyses précédemment réalisées sur le réseau) et la forme de la signature lors d'une attaque. Cette comparaison est basée sur l'utilisation d'un algorithme de comparaison (en anglais, « curve matching ») qui calcule à chaque pas de temps (t) la distance (par exemple : euclidienne) entre la signature fournie par l'algorithme WLM à l'instant (t) et la signature fournie par l'algorithme WLM à l'instant (t-1). Enfin, lorsqu'une intrusion apparait via l'algorithme de comparaison, elle est détectée grâce à un seuil qui permet de déclencher une la mise en oeuvre d'une réponse adaptée.

Par ailleurs, pour s'adapter à de nouveaux types d'intrusions ou de perturbations qui sont moins visibles, comme l'attaque de type "man in the middle", on utilise, au lieu de statistiques relatives au réseau de communication comme cela est usuellement le cas, la charge utile des paquets de réseau (par exemple, paquets de position, paquets de vitesses, paquets d'accélération, paquet de données d'une manière générale). La méthodologie est basée sur trois étapes. Les processus de pré-traitement des paquets de réseau permettent de mieux exposer les caractéristiques d'intérêt de série de paquets. Les premières étapes, comme présentées précédemment (20, 30) sont consacrées à la caractérisation du trafic à l'aide de la fonction delta ($\Delta_t$) et de l'algorithme WLM. Leurs objectifs sont d'obtenir une signature spécifique du signal à analyser. Les étapes suivantes consistent en la classification automatique des signatures, par exemple lorsque son objectif est de fournir un déclencheur binaire pour alerter l'administrateur ou encore commencer à mettre en oeuvre des mécanismes de prévention d'intrusion ou d'attaque.

Ainsi, avant le test de classification proprement dit, les enregistrements individuels sont traités pour calculer la distance euclidienne : un enregistrement consiste en des distances de déplacement (dans cet exemple) de chaque dispositif parcouru entre chaque enregistrement consécutif. Dans les enregistrements originaux de cet exemple, la position de chaque dispositif est définie à l'aide de coordonnées polaires telles que : [$\theta_{i,t}$, $\rho_{i,t}$] ou :

*i ∈ R⁺ et représente le numéro d'identification du dispositif*

*t ∈ R⁺ et l'index* Tod (*time of the day*)

On définit ensuite une fonction euclidienne $F_{eucd} : R \to R^+$ telle que :

$$F_{eucd}\left([\theta_{i,t}, \rho_{i,t}], [\theta_{i,t+t_{INT}}, \rho_{i,t+t_{INT}}]\right) = \sqrt{\rho_{i,t}^2 + \rho_{i,t+t_{INT}}^2 - 2\rho_{i,t} \cdot \rho_{i,t+t_{INT}} \cos(\theta_{i,t} - \theta_{i,t+t_{INT}})}$$

Ou $t_{INT} \in R^+$ est l'intervalle de déclaration de chaque dispositif individuel.

Le pseudo-code de la distance euclidienne des positions du dispositif est détaillée comme suit :

```
Algorithm 1 distance euclidienne à partir de positions de dispositifs

Require: enregistrements sous forme de table

Output: nouvelle table comprenant un tableau de distance euclidienne

1: TNuniq = Find unique values in field TBL.TN

2: Create an empty table TBLnew

3: for ii = 1, . . . , Length of TNuniq do

4:      Copy rows of TBL to TBLtemp

        where TBL.TN == LBuniq(ii)

5:      for i3 = 1, . . . , Length of TBLtemp - 1 do

6:              Create an empty table TBLeu

7:              TBLeu.Eucl = run Feucd at index i3

8:              TBLeu.Tod = TBLtemp.Tod(i3)

9:      end for

10:     Parsing table TBLeu with tINT 6 10seconds

11:     Append TBLnew with TBLeu

12: end for

13: Sort TBLnew with property TBLnew.Tod
```

Comme le montre l'algorithme 1, chaque fichier d'enregistrement est chargé sous forme de tableau (*TBL*) avec des champs tels que la position dans $\theta$ et $\rho$, la destination du paquet (*DST*), le numéro de dispositif (*TN*) et l'heure du jour (*ToD*). L'objectif de l'algorithme 1 est d'obtenir un nouveau tableau qui enregistre la distance de déplacement calculée de chaque dispositif. On y parvient en calculant la distance euclidienne de chaque dispositif entre deux enregistrements consécutifs et en enregistrant cette information dans un champ *Eucl* d'une nouvelle table *TBLnew.* Le *ToD* de ce dernier enregistrement est utilisé comme horodatage. On itère *Feucd* selon l'algorithme 1 à chaque fichier d'enregistrement. On obtient ainsi la liste (delta) $\Delta_t$ des distances aléatoires parcourues par les dispositifs enregistrés au temps t. Ce processus permet de mieux comprimer les données analysées et de mieux exposer des modèles de déplacement anormaux induits par des intrus. L'utilisation de cette fonction delta permet, selon l'invention d'améliorer les performances de l'algorithme WLM.

Ensuite, le tableau obtenu par la fonction delta (série temporelle) est traité par l'algorithme (*WLM*) pour le réseau de dispositifs afin de générer une signature par dispositif. Les inventeurs exploitent avantageusement la capacité de l'outil à saisir les différentes complexités du signal à différentes échelles de temps et de moment de l'analyse. Les inventeurs ont testé que ceci peut être efficace contre les attaques par inondation au sein du réseau sans fil des dispositifs du système, au cours des différentes périodes de la journée et l'échelle de temps devrait partager des caractéristiques multi fractales similaires : lorsque le signal a été zoomé et dézoomé à différentes échelles individuelles, le segment de signal ressemblera à l'ensemble du signal ou à une partie d'autres échelles individuelles. Par l'étude des caractéristiques de l'échelle multi fractale, il est possible de classer le trafic du réseau de différents systèmes et identifier les anomalies.

L'analyse WLM est utilisée pour quantifier la variabilité de toute série chronologique (dans ce document, nous nous concentrons sur les informations sur de dispositifs en mouvement, par exemple aériens) que l'on souhaite caractériser. Cette analyse l'avantage de saisir la complexité du trafic pour différentes échelles de temps et différents moments de l'analyse. Cette analyse est une signature numérique utilisée pour trouver la différence entre le trafic légitime et le trafic qui contient une attaque. L'analyse multi fractale est essentiellement un terme mathématique de mesure ou d'estimation de la fonction du spectre multi fractal $D_h$ d'une certaine série temporelle.

Un processus fractal (mono-fractal ou autosimilaire) est contrôlé par un paramètre constant $D_h$ appelé La *dimension de Hausdorff-Besicovitch*. La *dimension de Hausdorff-Besicovitch $D_h$* est définie comme le rapport logarithmique entre les nombres N des homothéties internes d'un objet et le réciproque du rapport commun 1 de cette homothétie : la *dimension de Hausdorff-Besicovitch $D_h$* reste une constante pour une valeur arbitraire de I. Au lieu de cela, un processus multi fractal montre le comportement de la loi de puissance à différentes échelles individuelles. Par conséquent, au lieu de décrire le processus par un seul exposant d'échelle, l'analyse multi fractale vise à obtenir la collecte de la dimension fractale lorsque le processus montre le comportement de la loi de puissance et à trouver des moyens de les décrire.

La détermination numérique directe par le calcul du spectre multi fractal n'est pas pratique car le nombre d'échelles à calculer est infini. C'est pourquoi il est introduit le formalisme multi fractal. Le coefficient de leader (guide) d'onde est l'une des nombreuses quantités multi résolution qui peuvent être utilisées pour estimer le spectre multi fractal, et c'est celui qui est privilégié par les inventeurs. Par rapport à des méthodes des ondelettes discrètes, cette méthode partage non seulement le même avantage, car ils s'appuient tous les deux sur la décomposition des ondelettes orthogonales, mais elle estime aussi correctement les spectres multi fractal à des moments négatifs. L'algorithme WLM fournit un outil simple et efficace pour et une solution simple pour l'estimation de l'indice multi fractal en calculant la fonction de mise à l'échelle avec l'ondelette à des moments donnés et estimer ensuite le spectre multi fractal. Il renvoie de multiples attributs qui montrent les différents aspects de la multi « *fractalité* » du signal, tel que l'ensemble des fonctions de la structure S, la mise à l'échelle l'exposant ç(q) et le spectre multi fractal D(h).

Comme indiqué précédemment l'étape suivante après l'acquisition de la signature par l'algorithme WML, consiste à comparer les signatures du trafic normal à celles du trafic contenant des intrusions malveillantes puis d'observer les modèles qui émergent de l'intensité différente de l'attaque : cette comparaison est par exemple réalisée par classification automatique. Les inventeurs utilisent pour cela une méthode de classification vectorielle 1-D en utilisant un réseau de mémoire à long terme (LSTM). LSTM est un réseau neuronal récurrent modifié (RNN) utilisé pour la classification des séries chronologiques, de la voix et du texte notamment.

Par rapport aux structures de réseaux neuronaux à anticipation plus conventionnelles, RNN permet la modification de ses états internes en fonction de la sortie de l'état précédent, formant ainsi une structure de rétroaction. Les structures RNN classiques souffrent d'un problème de disparition de gradient, et pour résoudre ce problème, il est proposé d'utiliser des cellules LSTM qui peuvent conserver sa mémoire de durée arbitraire et résout potentiellement ce problème. Une unité neuronale LSTM typique se compose d'une cellule, d'une porte d'entrée, d'une porte de sortie et d'une porte d'oubli. Cette structure particulière permet au réseau de conserver les informations de l'état précédent (passé) avec un poids. L'état de la cellule (c) est constamment mis à jour par les portes en fonction de l'état d'entrée (X) et de l'état caché (h), où d'abord la porte d'oubli (F) décide dans quelle mesure les informations dans l'état de la cellule seront conservées, puis la porte d'entrée (I) décide quelles valeurs individuelles dans l'état de cellule doivent être mises à jour ainsi que le niveau de modification. Au final, la porte de sortie (O) fait une copie filtrée de l'état de la cellule pour passer à l'état suivant. Le réseau LSTM particulier utilisé par les inventeurs est un réseau bidirectionnel LSTM (BiLSTM), généralement utilisée pour la classification de séquences et de séries chronologiques. Un BiLSTM duplique et empile essentiellement une couche LSTM supplémentaire à côté de la couche LSTM d'origine et la fait fonctionner dans le sens inverse, vers l'arrière, ce qui permet au réseau de préserver les informations de l'état suivant. Cette implémentation permet au réseau de mieux comprendre le contexte du signal. Le modèle proposé consiste en une couche d'entrée de séquence 1-D, une couche BiLSTM de 500 unités cachées, une couche entièrement connectée, une couche softmax et une couche de classification. D'autres architectures peuvent également être mises en oeuvre pour obtenir un résultat similaire. Le point clé de la méthode proposée pouvant être considéré comme comment fournir des données efficaces et exploitables à la méthode de classification automatique.

5.2.4. Adaptation de technique de transmission

Après la détection d'une anomalie comportementale, une technique de contournement peut être mise en oeuvre. On note que l'anomalie comportementale peut être consécutive d'une attaque, sans que cette condition ne soit obligatoire. D'autres causes peuvent produire une anomalie comportementale sans nécessairement être une attaque.

Quoi qu'il en soit, lorsqu'une anomalie comportementale est présente, selon l'invention, on met en oeuvre une technique d'adaptation de technique de transmission et/ou de changement de technique de transmission et/ou de blocage. L'objectif est de maintenir de maintenir des moyens de communication non perturbés, afin de poursuivre les échanges de données au sein du réseau de dispositifs.

Plus particulièrement, le système d'adaptation repose sur l'utilisation un module de radio SDR (Software Defined Radio) qui permet lorsque le seuil d'anomalie comportementale est atteint soit d'effectuer faire un saut de fréquence, soit de basculer d'un codage logiciel du lien C2 à un autre codage logiciel (par exemple : basculement d'une technique basée WIFI à une technique basée ZigBee). Une telle technique d'adaptation rend, au moins partiellement, inopérantes des attaques décrites précédemment. A noter que dans un réseau « Ad-hoc », il y a de nombreuses reconfigurations possibles avec plusieurs chemins de transmission de données différents. Ainsi, le fait de disposer d'un module radio SDR aide à la flexibilité et à la mise en oeuvre de plusieurs scénarios d'adaptation également différents.

On décrit ci-après un exemple d'adaptation consistant à effectuer un changement de protocole de transmission. Plus particulièrement on se place dans un cas où l'on dispose d'une communication entre le segment air et le segment sol, c'est-à-dire entre un agent (drone ou un avion) et une station au sol GCS (ou un système radar). On suppose qu'une attaque intervient sur le lien de communication, ce qui provoque une anomalie comportementale (voir détection précédente). Les deux plateformes sont équipées d'un module radio de type « LimeSDR » permettant de faire communiquer des plateformes entre elles et de faire de la radio SDR. Grâce à l'utilisation de cette carte, il est possible de programmer différentes stratégies d'adaptation pour que l'anomalie comportementale (l'intrusion malveillante) n'affecte plus le réseau de communication.

Deux stratégies d'adaptation sont développées pour cet exemple. Lors de l'apparition d'une anomalie comportementale fournie par l'algorithme « IDS », le module radio « LimeSDR » qui se trouve dans le segment air (resp. segment sol) bascule d'une fréquence initiale (GMSK TX, resp. GMSK RX) à une autre fréquence (GMSK TX2, resp. GMSK RX2) pour que l'anomalie comportementale (l'intrusion malveillante) ne puisse plus affecter le réseau de communication. Si jamais l'anomalie comportementale persiste dans le réseau de communication (suite à une attaque multifréquence par exemple) alors le principe consiste à passer sur une adaptation par changement de protocole.

Cette stratégie d'adaptation consiste à passer d'un protocole (par exemple WIFI) à un autre protocole (par exemple ZigBee). À noter que pour les deux stratégies, la synchronisation de basculement s'effectue soit d'une manière préprogrammée avec un basculement automatique si l'émetteur ou le récepteur ne reçoivent plus d'information pendant plusieurs minutes, soit par un canal de communication sécurisé.

D'autres types d'interventions sont envisageables, notamment pour l'utilisation d'un canal de communication adjacent, différent du canal de communication principal. En effet, lorsqu'un comportement potentiellement anormal est détecté, une première mesure à prendre peut-être de contrôler la véracité de ce comportement. Comme on suppose que le lien par lequel les données comportementales sont transmises est potentiellement compromis, on tente par exemple d'utiliser un canal de transmission adjacent pour pouvoir transmettre des instructions particulières au véhicule, dans l'objectif d'obtenir une information quant à sa situation réelle et permettre de synchroniser les changements de configuration du canal de communication principal entre un émetteur et un récepteur (i.e. de positionner émetteur et récepteur sur des paramètres de transmission/réception partagés). Les données à transmettre par l'intermédiaire de ce canal peuvent être des données de diagnostiques, qui sont issues d'une procédure de diagnostique particulière, mise en oeuvre par le véhicule lorsqu'il reçoit une requête d'interrogation particulière en provenance du dispositif de surveillance. Cette requête d'interrogation est, lorsque c'est possible, transmise par l'intermédiaire d'un canal adjacent. Les données à transmettre par l'intermédiaire de ce canal peuvent être des données de configuration du canal de communication principal.

Lorsqu'une couverture par un réseau de téléphonie mobile est disponible : ce canal adjacent (et éventuellement de basculement) peut être un lien 5G, 4G ou 3G, avec pour avantage une certaine robustesse de ce type de communications (qui bénéficient d'une modulation et d'un pile protocolaire assez résistante et protégée contre des attaques).

En cas de d'absence de couverture par un réseau de téléphonie mobile : un lien de type LoRa à 2,45 GHz (modulation LoRa, mais en continu, sans limite de « duty cycle ») et en cas en plus de blocage de toute la bande ISM à 2,45 GHz (où il y a le WiFi, Zigbee, Bluetooth et donc le LoRa 2,45 GHz...), il est possible d'utiliser le LoRa dans la bande ISM à 868 MHz et particulièrement le canal à 869,5 MHz.

5.3. Autres caractéristiques et avantages

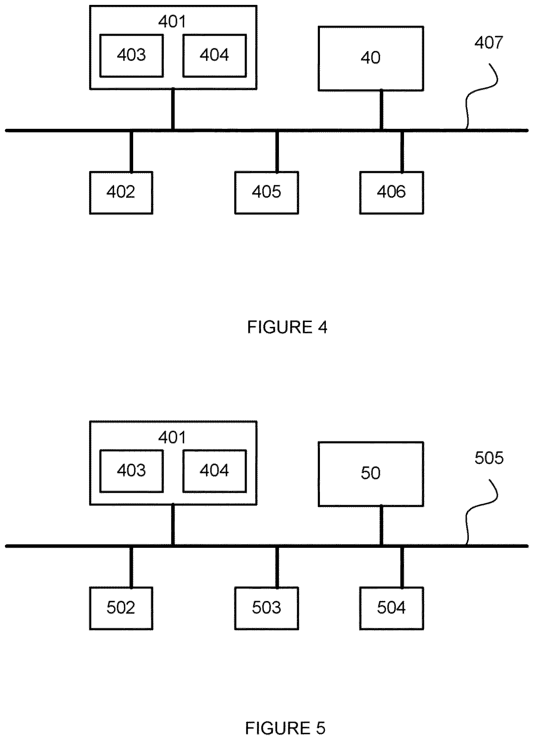

La figure 4 représente dispositif de surveillance (GCS) selon un mode de réalisation de l'invention.

Dispositif de surveillance (GCS) peut comprendre au moins un processeur matériel 40, une unité de stockage 402, une interface vers un dispositif de saisie 403, une interface vers un dispositif d'affichage 404, une interface 405 spécifique, et au moins une interface de réseau 406 qui sont connectés entre eux au travers d'un bus 407. Bien entendu, les éléments constitutifs du dispositif de surveillance peuvent être connectés au moyen d'une connexion autre qu'un bus.

Le processeur 40 commande les opérations du dispositif de surveillance. L'unité de stockage 402 stocke au moins un programme pour la mise en oeuvre d'un procédé de traitement de données de déplacement de véhicules selon un mode de réalisation de l'invention à exécuter par le processeur 40, et diverses données, telles que des paramètres utilisés pour des calculs effectués par le processeur 40, des données intermédiaires de calculs effectués par le processeur 40, etc. Le processeur 40 peut être formé par tout matériel ou logiciel connu et approprié, ou par une combinaison de matériel et de logiciel. Par exemple, le processeur 40 peut être formé par un matériel dédié tel qu'un circuit de traitement, ou par une unité de traitement programmable telle qu'une unité centrale de traitement (Central Processing Unit) qui exécute un programme stocké dans une mémoire de celui-ci.

L'unité de stockage 402 peut être formée par n'importe quel moyen approprié capable de stocker le programme ou les programmes et des données d'une manière lisible par un ordinateur. Des exemples d'unité de stockage 402 comprennent des supports de stockage non transitoires lisibles par ordinateur tels que des dispositifs de mémoire à semi-conducteurs, et des supports d'enregistrement magnétiques, optiques ou magnéto-optiques chargées dans une unité de lecture et d'écriture.

L'interface vers un dispositif de saisie 403 peut, lorsque nécessaire, effectuer la connexion avec un clavier, un dispositif de pointage tel qu'une souris à utiliser par un utilisateur pour entrer des commandes. L'interface vers un dispositif d'affichage 404 peut lorsque nécessaire, effectuer la connexion avec un module d'affichage, tel que par exemple une interface graphique utilisateur ou GUI (pour Graphical User Interface). Saisie 403 et affichage 404 constituent l'interface utilisateur 401 et peuvent être formés intégralement au moyen d'un écran tactile, par exemple.

L'interface 405 spécifique fournit une interface de secours (canal auxiliaire) entre me dispositif de surveillance (GCS) et le sous-système d'un dispositif sous surveillance (DT1, DT2, DT3). L'interface 405 peut communiquer avec le sous-système de traitement de données d'un dispositif sous surveillance (DT1, DT2, DT3) via une connexion filaire ou sans fil.

Au moins une interface réseau 406 fournit une connexion entre le dispositif de surveillance (GCS) et un équipement distant via un réseau de communication, tel qu'Internet. L'interface réseau 406 peut fournir, en fonction de sa nature, une connexion filaire ou sans fil au réseau.

La figure 5 représente un sous-système de traitement de données d'un dispositif sous surveillance (DT1, DT2, DT3) selon un mode de réalisation de l'invention.

Le sous-système de traitement de données d'un dispositif sous surveillance (DT1, DT2, DT3) peut comprendre au moins un processeur matériel 50, une unité de stockage 502, un module de traitement de données 503 et une interface 504, qui sont connectés entre eux au travers d'un bus 505. Bien entendu, les éléments constitutifs du sous-système d'un dispositif sous surveillance (DT1, DT2, DT3) peuvent être connectés au moyen d'une connexion autre qu'un bus.

Le processeur 50 commande les opérations du sous-système d'un dispositif sous surveillance (DT1, DT2, DT3). L'unité de stockage 502 stocke au moins un programme pour la mise en oeuvre d'un procédé de traitement de données selon un mode de réalisation de l'invention à exécuter par le processeur 50, et diverses données, telles que des paramètres utilisés pour des calculs effectués par le processeur 50, des données intermédiaires de calculs effectués par le processeur 50, etc. Le processeur 50 peut être formé par tout matériel ou logiciel connu et approprié, ou par une combinaison de matériel et de logiciel. Par exemple, le processeur 50 peut être formé par un matériel dédié tel qu'un circuit de traitement, ou par une unité de traitement programmable telle qu'une unité centrale de traitement (Central Processing Unit) qui exécute un programme stocké dans une mémoire de celui-ci.

L'unité de stockage 502 peut être formée par n'importe quel moyen approprié capable de stocker le programme ou les programmes et des données d'une manière lisible par un ordinateur. Des exemples d'unité de stockage 502 comprennent des supports de stockage non transitoires lisibles par ordinateur tels que des dispositifs de mémoire à semi-conducteurs, et des supports d'enregistrement magnétiques, optiques ou magnéto-optiques chargées dans une unité de lecture et d'écriture.

L'interface 504 fournit une interface entre le sous-système du dispositif sous surveillance (DT1, DT2, DT3) et dispositif de surveillance (GCS). L'interface 504 peut communiquer avec dispositif de surveillance (GCS) via une connexion idoine, particulièrement dans la cadre de l'échange de données par l'intermédiaire d'un canal auxiliaire.

Le module de traitement des données 503 est contrôlé par le processeur 50. Le module de traitement des données 503 peut être un module logiciel ou une combinaison de matériel et de logiciel.

## Revendications

1. Procédé de surveillance d'un système comprenant un dispositif de surveillance et une pluralité de dispositifs connectés au dispositif de surveillance par l'intermédiaire d'un réseau de communications, comprenant:

   - une étape d'analyse (Ph#1) de contenus de paquets échangés au sein du réseau de communication, délivrant une donnée représentative d'un comportement d'au moins un dispositif courant parmi la pluralité de dispositifs, comprenant :

- une étape d'obtention (10), pour un dispositif courant, d'une série temporelle représentative du contenu de paquets de données reçu par le dispositif de surveillance, pour une période déterminée, dite série temporelle courante ;
- une étape de calcul (20), d'une distance (Delta) correspondant à la différence entre une donnée à un instant t et à un instant t-1 et séparant le contenu d'un paquet courant du contenu d'un paquet précédent au sein ladite série temporelle courante, délivrant une série temporelle de distances ;
- une étape d'obtention (30), à l'aide de ladite série temporelle de distances, d'une signature représentative d'une activité dudit dispositif courant, dite signature courante.

2. Procédé de surveillance selon la revendication 1, comprenant, lorsque (Ci) la donnée représentative du comportement du dispositif courant excède un seuil prédéterminé, une étape (Ph#2) de mise en oeuvre d'une procédure de correction.

3. Procédé de surveillance selon la revendication 1, dans lequel ladite étape d'analyse (Ph#1) comprend en outre

- une étape de comparaison (40) de ladite signature courante avec au moins une signature de référence délivrant ladite donnée représentative du comportement dudit dispositif courant.

4. Procédé de surveillance selon la revendication 1, dans lequel ladite étape d'analyse (Ph#1) comprend en outre une étape de classification de la signature courante à l'aide d'un module de classification automatique.

5. Procédé de surveillance selon la revendication 1, dans lequel ladite distance est une distance euclidienne.

6. Procédé de surveillance selon la revendication 5, dans lequel la distance euclidienne est calculée en appliquant la fonction suivante, pour un dispositif courant :

$$F_{eucd}\left(\left[\theta_{i,t},\rho_{i,t}\right],\left[\theta_{i,t+t_{INT}},\rho_{i,t+t_{INT}}\right]\right) = \sqrt{\rho_{i,t}^2 + \rho_{i,t+t_{INT}}^2 - 2\rho_{i,t}.\rho_{i,t+t_{INT}}\cos(\theta_{i,t} - \theta_{i,t+t_{INT}})}$$

Dans laquelle :

- $[\theta_{i,t},\rho_{i,t}]$ représente les coordonnées du dispositif courant i à un instant $t$;
- $[\theta_{i,t+t_{INT}},\rho_{i,t+t_{INT}}]$ représente les coordonnées du dispositif courant i à un instant $t+t_{INT}$;
- $t_{INT}$ représente l'intervalle de temps séparant les deux coordonnées.

7. Procédé de surveillance selon la revendication 1, dans lequel l'étape d'obtention de la signature courante comprend la détermination d'une courbe représentative du spectre multifractal (WLM) desdites distances de ladite série temporelle courante.

8. Procédé de surveillance selon la revendication 1, dans lequel ladite étape d'obtention de la série temporelle courante comprend :

- l'identification, au sein d'un ensemble de paquets reçus par ledit dispositif de surveillance, d'un sous-ensemble de paquets comprenant des positions successives du dispositif courant au sein d'en environnement donné ;
- l'extraction desdites positions successives dudit dispositif courant dudit sous-ensemble de paquets ;
- l'ordonnancement temporel desdites positions délivrant ladite série temporelle courante.

9. Procédé de surveillance selon la revendication 1, dans lequel ladite étape (Ph#2) de mise en oeuvre d'une procédure de correction comprend :

- la détermination (100) d'une technique de transmission courante utilisée par le dispositif courant ;
- la sélection (110), parmi au moins deux techniques de transmission disponibles, d'une technique de transmission de substitution, différente de la technique de transmission courante ;
- le remplacement (120) de ladite technique de transmission courante, par la technique de transmission de substitution.

10. Procédé de surveillance selon la revendication 9, dans lequel les dites au moins deux techniques de transmission disponibles comprennent, pour un protocole donné de transmission radio au moins deux bandes de transmission différentes.

11. Procédé de surveillance selon la revendication 9, dans lequel les dites au moins deux techniques de transmission disponibles appartiennent au groupe comprenant :

   - wifi ;
   - zigbee ;
   - lifi ;
   - LTE.

12. Procédé de surveillance selon la revendication 1, dans lequel lesdits dispositifs de la pluralité de dispositifs connectés au dispositif de surveillance appartiennent au groupe comprenant :

   - des véhicules aériens léger sans équipage ;
   - des véhicules roulants ;
   - des véhicules aériens avec équipage ;
   - des dispositifs de transports autonomes ;
   - des dispositifs de production ;
   - des objets connectés.

13. Dispositif de surveillance d'un système apte à mettre en oeuvre un procédé de surveillance selon les revendications 1 à 12, comprenant un dispositif de surveillance et une pluralité de dispositifs connectés au dispositif de surveillance par l'intermédiaire d'un réseau de communications, comprenant en outre :

   - des moyens d'analyse de contenus de paquets échangés au sein du réseau de communication, délivrant une donnée représentative d'un comportement d'au moins un dispositif courant parmi la pluralité de dispositifs ;
   - des moyens de mise en oeuvre d'une procédure de correction, activés lorsque la donnée représentative du comportement du dispositif courant excède un seuil prédéterminé

14. Produit programme d'ordinateur téléchargeable depuis un réseau de communication et/ou stocké sur un support lisible par ordinateur et/ou exécutable par un microprocesseur, comprenant des instructions de code de programme pour l'exécution d'un procédé de surveillance selon la revendication 1, lorsqu'il est exécuté sur un ordinateur.

**Patentansprüche**

1. Verfahren zur Überwachung eines Systems, das eine Überwachungsvorrichtung und eine Mehrzahl von Vorrichtungen, die mittels eines Kommunikationsnetzes mit der Überwachungsvorrichtung verbunden sind, umfasst, umfassend:

   - einen Schritt des Analysierens (Ph#1) von Inhalten von Paketen, die innerhalb des Kommunikationsnetzes ausgetauscht werden, die ein Datenelement liefern, das für ein Verhalten wenigstens einer aktuellen Vorrichtung aus der Mehrzahl von Vorrichtungen repräsentativ ist, umfassend:
   - einen Schritt des Beziehens (10), für eine aktuelle Vorrichtung, einer zeitlichen Reihe, die für den Inhalt von Datenpaketen repräsentativ ist, der von der Überwachungsvorrichtung empfangen wird, für eine bestimmte Zeitspanne, aktuelle zeitliche Reihe genannt;
   - einen Schritt des Berechnens (20) eines Abstands (Delta), der der Differenz zwischen einem Datenelement zu einem Zeitpunkt t und zu einem Zeitpunkt t-1 entspricht und den Inhalt eines aktuellen Pakets von dem Inhalt eines vorigen Pakets innerhalb der aktuellen zeitlichen Reihe trennt, der eine zeitliche Reihe von Abständen liefert;
   - einen Schritt des Beziehens (30), mithilfe der zeitlichen Reihe von Abständen, einer Signatur, die für eine Aktivität der aktuellen Vorrichtung repräsentativ ist, aktuelle Signatur genannt.

2. Überwachungsverfahren nach Anspruch 1, umfassend, wenn (Ci) das Datenelement, das für das Verhalten der aktuellen Vorrichtung repräsentativ ist, eine vorbestimmte Schwelle überschreitet, einen Schritt (Ph#2) des Durchführens eines Korrekturverfahrens.

3. Überwachungsverfahren nach Anspruch 1, wobei der Schritt des Analysierens (Ph#1) ferner Folgendes umfasst

   - einen Schritt des Vergleichens (40) der aktuellen Signatur mit wenigstens einer Referenzsignatur, der das Datenelement liefert, das für das Verhalten der aktuellen Vorrichtung repräsentativ ist.

4. Überwachungsverfahren nach Anspruch 1, wobei der Schritt des Analysierens (Ph#1) ferner einen Schritt des Klassifizierens der aktuellen Signatur mithilfe eines Moduls zur automatischen Klassifizierung umfasst.

5. Überwachungsverfahren nach Anspruch 1, wobei der Abstand ein euklidischer Abstand ist.

6. Überwachungsverfahren nach Anspruch 5, wobei der euklidische Abstand unter Anwendung der folgenden Funktion für eine aktuelle Vorrichtung berechnet wird:

$$F_{eucd}\big([\theta_{i,t}, \rho_{i,t}], [\theta_{i,t+t_{INT}}, \rho_{i,t+t_{INT}}]\big)$$
$$= \sqrt{\rho_{i,t}^2 + \rho_{i,t+t_{INT}}^2 - 2\rho_{i,t} \cdot \rho_{i,t+t_{INT}} \, cos\big(\theta_{i,t} - \theta_{i,t+t_{INT}}\big)}$$

Wobei:

   - $[\theta_{i,t}, \rho_{i,t}]$ die Koordinaten der aktuellen Vorrichtung i zu einem Zeitpunkt t repräsentiert;
   - $[\theta_{i,t+t_{INT}}, \rho_{i,t+t_{INT}}]$ die Koordinaten der aktuellen Vorrichtung i zu einem Zeitpunkt $t+t_{INT}$ repräsentiert;
   - $t_{INT}$ das Zeitintervall repräsentiert, das die zwei Koordinaten trennt.

7. Überwachungsverfahren nach Anspruch 1, wobei der Schritt des Beziehens der aktuellen Signatur das Bestimmen einer Kurve umfasst, die für das multifraktale Spektrum (WLM) der Abstände der aktuellen zeitlichen Reihe repräsentativ ist.

8. Überwachungsverfahren nach Anspruch 1, wobei der Schritt des Beziehens der aktuellen zeitlichen Reihe Folgendes umfasst:

   - das Identifizieren, innerhalb einer Menge von Paketen, die von der Überwachungsvorrichtung empfangen werden, einer Teilmenge von Paketen, die aufeinanderfolgende Positionen der aktuellen Vorrichtung innerhalb einer bestimmten Umgebung umfasst;
   - das Extrahieren der aufeinanderfolgenden Positionen der aktuellen Vorrichtung aus der Teilmenge von Paketen;
   - das zeitliche Planen der Positionen, das die aktuelle zeitliche Reihe liefert.

9. Überwachungsverfahren nach Anspruch 1, wobei der Schritt (Ph#2) des Durchführens eines Korrekturverfahrens Folgendes umfasst:

   - das Bestimmen (100) einer aktuellen Übertragungstechnik, die von der aktuellen Vorrichtung verwendet wird;
   - das Auswählen (110), aus wenigstens zwei verfügbaren Übertragungstechniken, einer Ersatzübertragungstechnik, die sich von der aktuellen Übertragungstechnik unterscheidet;
   - das Ersetzen (120) der aktuellen Übertragungstechnik durch die Ersatzübertragungstechnik.

10. Überwachungsverfahren nach Anspruch 9, wobei die wenigstens zwei verfügbaren Übertragungstechniken für ein bestimmtes Funkübertragungsprotokoll wenigstens zwei verschiedene Übertragungsbänder umfassen.

11. Überwachungsverfahren nach Anspruch 9, wobei die wenigstens zwei verfügbaren Übertragungstechniken zu der Gruppe gehören, die Folgendes umfasst:

   - Wifi;
   - Zigbee;
   - Lifi;
   - LTE.

**12.** Überwachungsverfahren nach Anspruch 1, wobei die Vorrichtungen der Mehrzahl von Vorrichtungen, die mit der Überwachungsvorrichtung verbunden sind, zu der Gruppe gehören, die Folgendes umfasst:

- leichte unbemannte Luftfahrzeuge;
- fahrende Fahrzeuge;
- bemannte Luftfahrzeuge;
- autonome Transportvorrichtungen;
- Produktionsvorrichtungen;
- verbundene Objekte.

**13.** Überwachungsvorrichtung eines Systems, das geeignet ist, ein Überwachungsverfahren nach den Ansprüchen 1 bis 12 durchzuführen, das eine Überwachungsvorrichtung und eine Mehrzahl von Vorrichtungen, die mittels eines Kommunikationsnetzes mit der Überwachungsvorrichtung verbunden sind, umfasst, ferner umfassend:

- Mittel zum Analysieren von Inhalten von Paketen, die innerhalb des Kommunikationsnetzes ausgetauscht werden, die ein Datenelement liefern, das für ein Verhalten wenigstens einer aktuellen Vorrichtung aus der Mehrzahl von Vorrichtungen repräsentativ ist;
- Mittel zur Durchführung eines Korrekturverfahrens, die aktiviert werden, wenn das Datenelement, das für das Verhalten der aktuellen Vorrichtung repräsentativ ist, eine vorbestimmte Schwelle überschreitet.

**14.** Computerprogrammprodukt, das aus einem Kommunikationsnetz heruntergeladen werden kann und/oder auf einem computerlesbaren Datenträger gespeichert ist und/oder von einem Mikroprozessor ausgeführt werden kann, umfassend Programmcode-Anweisungen für die Ausführung eines Überwachungsverfahrens nach Anspruch 1, wenn es auf einem Computer ausgeführt wird.

## Claims

**1.** A method of monitoring a system comprising a monitoring device and a plurality of devices connected to the monitoring device via a communication network, comprising:

- a step (Ph#1) of analysing contents of packets exchanged within the communication network, outputting a piece of data representative of a behaviour of at least one current device among the plurality of devices, comprising:
- a step (10) of obtaining, for a current device, a time series representative of the content of data packets received by the monitoring device, for a determined period, so-called current time series;
- a step (20) of calculating a distance (Delta) corresponding to the difference between a piece of data at a time point t and at a time point t-1 and separating the content of a current packet from the content of a previous packet within said current time series, outputting a time series of distances;
- a step (30) of obtaining, using said time series of distances, a signature representative of an activity of said current device, so-called current signature.

**2.** The monitoring method according to claim 1, comprising, when (Ci) the piece of data representative of the behaviour of the current device exceeds a predetermined threshold, a step (Ph#2) of implementing a correction procedure.

**3.** The monitoring method according to claim 1, wherein said analysis step (Ph#1) further comprises

- a step (40) of comparing said current signature with at least one reference signature outputting said piece of data representative of the behaviour of said current device.

**4.** The monitoring method according to claim 1, wherein said analysis step (Ph#1) further comprises a step of classifying the current signature using an automatic classification module.

**5.** The monitoring method according to claim 1, wherein said distance is a Euclidean distance.

**6.** The monitoring method according to claim 5, wherein the Euclidean distance is calculated by applying the following function, for a current device:

$$E_{eucd}\left(\left[\theta_{i,t}, \rho_{i,t}\right], \left[\theta_{i,t+t_{INT}}, \rho_{i,t+t_{INT}}\right]\right)$$

$$= \sqrt{\rho_{i,t}^2 + \rho_{i,t+t_{INT}}^2 - 2\rho_{i,t}\cdot\rho_{i,t+t_{INT}}\cdot\cos\left(\theta_{i,t} - \theta_{i,t+t_{INT}}\right)}$$

Wherein:

- $[\theta_{i,t}, \rho_{i,t}]$ represents the coordinates of the current device $i$ at a time point $t$;
- $[\theta_{i,t+t_{INT}}, \rho_{i,t+t_{INT}}]$ represents the coordinates of the current device $i$ at a time point $t + t_{INT}$;
- $t_{INT}$ represents the time interval separating the two coordinates.

7. The monitoring method according to claim 1, wherein the step of obtaining the current signature comprises determining a curve representative of the multifractal spectrum (WLM) of said distances of said current time series.

8. The monitoring method according to claim 1, wherein said step of obtaining the current time series comprises:

- identifying, within a set of packets received by said monitoring device, a subset of packets comprising successive positions of the current device within a given environment;
- extracting said successive positions of said current device from said subset of packets;
- temporally scheduling said positions outputting said current time series.

9. The monitoring method according to claim 1, wherein said step (Ph#2) of implementing a correction procedure comprises:

- determining (100) a current transmission technique used by the current device;
- selecting (110), from among at least two available transmission techniques, a substitution transmission technique, different from the current transmission technique;
- replacing (120) said current transmission technique with the substitution transmission technique.

10. The monitoring method according to claim 9, wherein said at least two available transmission techniques comprise, for a given radio transmission protocol, at least two different transmission bands.

11. The monitoring method according to claim 9, wherein said at least two available transmission techniques belong to the group comprising:

- wifi;
- zigbee;
- lifi;
- LTE.

12. The monitoring method according to claim 1, wherein said devices of the plurality of devices connected to the monitoring device belong to the group comprising:

- lightweight unmanned aerial vehicles;
- rolling vehicles;
- manned aerial vehicles;
- autonomous transport devices;
- production devices;
- connected objects.

13. A device for monitoring a system able to implement a monitoring method according to claims 1 to 12, comprising a monitoring device and a plurality of devices connected to the monitoring device via a communication network, further comprising:

- means for analysing contents of packets exchanged within the communication network, outputting a piece of data representative of a behaviour of at least one current device among the plurality of devices;
- means for implementing a correction procedure, activated when the piece of data representative of the behaviour of the current device exceeds a predetermined threshold

14. A computer program product downloadable from a communication network and/or stored on a medium readable by a computer and/or executable by a microprocessor, comprising program code instructions for the execution of a monitoring method according to claim 1, when executed on a computer.

*Ph#1*

FIGURE 1

FIGURE 2

FIGURE 3

FIGURE 4

FIGURE 5

**RÉFÉRENCES CITÉES DANS LA DESCRIPTION**

**Documents brevets cités dans la description**

- WO 2019034585 A1
- WO 2018170734 A1